Europäisches Patentamt

European Patent Office

Office européen des brevets

(11) Numéro de publication: **0 371 872**

**A1**

(12) # DEMANDE DE BREVET EUROPEEN

(21) Numéro de dépôt: **89403290.3**

(51) Int. Cl.⁵: **B25J 9/04, B25J 9/02**

(22) Date de dépôt: **28.11.89**

(30) Priorité: **29.11.88 FR 8815557**

(43) Date de publication de la demande:
**06.06.90 Bulletin 90/23**

(84) Etats contractants désignés:
**DE ES GB IT SE**

(71) Demandeur: **REGIE NATIONALE DES USINES RENAULT**
**Boîte postale 103 8-10 avenue Emile Zola**
**F-92109 Boulogne-Billancourt(FR)**

Demandeur: **EVOLUTECH Sàrl**
**Rue Louis Armand B.P. 103**
**F-95130 Franconville(FR)**

(72) Inventeur: **Alezier, Maurice**
**46, rue Pierre Curie**
**F-95140 Garges-Les-Gonesse(FR)**
Inventeur: **Graffin, Gilbert**
**3, rue Nieuport**
**F-77500 Chelles(FR)**
Inventeur: **Nowicki, Lucina**
**150, avenue de Saint Ouen**
**F-75017 Paris(FR)**
Inventeur: **David, Patrice**
**24, rue de Seine**
**F-95100 Argenteuil(FR)**

(74) Mandataire: **Saint Martin, René**
**Régie Nationale des Usines Renault 8 & 10,**
**avenue Emile Zola**
**F-92109 Boulogne Billancourt(FR)**

(54) **Robot multiaxes.**

(57) La présente invention se rapporte à un robot multiaxes comportant un premier bras (1) mobile animé d'un mouvement de translation sur un support (4) animé d'un mouvement de translation sur un second bras (3) orthogonal au premier et caractérisé par le fait que le bras (3) présente une platine (5) sur laquelle est monté un moteur (33) actionnant par l'intermédiaire d'un mécanisme de transformation de mouvement (32) le support (4) et un moteur (35) actionnant un arbre longitudinal (36) accouplé par l'intermédiaire d'un mécanisme de transformation de mouvement (37-14) au premier bras (1) de manière à déplacer celui-ci en translation.

## ROBOT MULTIAXES

La présente invention se rapporte à un robot multiaxes comportant un premier bras animé d'un mouvement de translation sur un support animé d'un mouvement de translation sur un second bras orthogonal au premier.

On connaît un robot du type ci-dessus. Le brevet français 2512.909 montre un tel robot mais le moteur assurant la translation du bras est monté sur le support. Du fait de l'agencement d'une motorisation sur la partie mobile, il est difficile de protéger cette motorisation lorsque le robot travaille dans une enceinte soumise à des projections de liquide ou dangereuses.

La présente invention a pour but de fournir un robot multiaxes du type à bras avec déplacement cartésien dont toute la motorisation est regroupée sur une partie fixe du robot. Grâce à cet agencement les moteurs peuvent être situés à l'extérieur de l'enceinte dans laquelle travaille le robot, ce qui offre une bonne protection de ces moteurs. La conception est modulaire, le nombre d'axes pouvant être adapté sur une même conception de base.

Conformément à l'invention, le bras présente une platine sur laquelle est monté un moteur actionnant, par l'intermédiaire d'un mécanisme de transformation de mouvement, le support et un moteur actionnant un arbre longitudinal accouplé par l'intermédiaire d'un mécanisme de transformation de mouvement au premier bras de manière à déplacer celui-ci en translation.

Selon une caractéristique, la platine du bras est montée rotative sur une platine fixe, un mécanisme d'entraînement assurant la rotation de cette platine.

Selon une autre caractéristique, le robot comporte un système vis-écrou de translation du support , ce système comportant une vis entraînée en rotation par un moteur et une vis immobilisée en translation dans le support .

Selon une caractéristique, le premier bras comprend une tige prismatique guidée en translation dans le support mobile et que l'entraînement dudit premier bras est assuré par le moteur de translation du premier bras par l'intermédiaire d'un arbre d'entraînement , actionnant un pignon engrenant avec une crémaillère liée audit premier bras.

L'invention va maintenant être décrite avec plus de détails en se référant à des modes de réalisation donnés à titre d'exemples et représentés par les dessins annexés.

La figure 1 représente un mode de réalisation du robot multiaxes selon l'invention.

La figure 2 représente un second mode de réalisation du robot selon l'invention.

En se référant aux dessins, le robot se compose d'un premier bras 1 dont au moins une extrémité 11 porte un outil de travail ou un poignet 2. Le bras 1 est animé d'un mouvement rectiligne selon un axe X par rapport à un support mobile de liaison 4 animé d'un mouvement rectiligne selon un axe Y orthogonal à X, sur un second bras 3 portant la motorisation.

Le bras 3 se compose d'une tige de guidage prismatique 31 réunissant une plaque terminale 32 à une platine 5 portant des moteurs d'animation des axes.

Cette platine 5 est montée rotative sur une platine de support fixe 6 portant un moteur 61 d'entraînement en rotation du robot qui peut ainsi pivoter autour d'un axe parallèle à la tige de guidage 31. L'entraînement en rotation de l'ensemble du bras 3 et du bras 1 est assuré à partir du moteur d'orientation 61 par l'intermédiaire d'un mécanisme de transmission 62 connu en soi. Ce mécanisme est, par exemple, constitué par une courroie crantée 621 engrenant avec une roue dentée de la platine 5.

Le support 4 est guidé en translation,avec immobilisation en rotation sur la tige prismatique 31, par l'intermédiaire d'un douille de guidage. L'entraînement en translation du support 4 selon Y est assuré par l'intermédiaire d'un système vis-écrou. La vis 34 de ce système est guidée en rotation par des roulements et se visse dans un écrou du support. Cette vis est entraînée en rotation par un moteur 33 monté sur la platine 5.

Le premier bras 1 comprend une tige de guidage prismatique 13 réunissant deux plaques terminales 11 et 12. Cette tige 13 coulisse par l'intermédiaire d'une douille sur le support 4, de manière que le bras 1 soit guidé en translation selon X tout en étant immobilisé en rotation. La tige 13 est de préférence orthogonale à la tige 31 de manière que les bras 1 et 3 aient des déplacements orthogonaux l'un par rapport à l'autre.

Le bras 3 porte un arbre d'entraînement 36 parallèle à la tige de guidage 31 et guidé par des roulements. Cet arbre est entraîné en rotation par un moteur 35. Il porte un pignon d'entraînement 37 qui peut coulisser longitudinalement tout en lui étant lié en rotation. Ce pignon engrène sur une crémaillère 14 liée à ses extrémités au bras 1. La rotation du pignon 37 déplace de ce fait le bras 1 en translation.

Le bras 3 porte un second arbre d'entraînement longitudinal 38, parallèle à la tige de guidage 31 et guidé par des roulements. Cet arbre 38 est entraîné en rotation par un moteur 39 monté sur la platine rotative 5. Il porte un pignon 391 qui peut cou lisser longitudinalement tout en lui étant lié en rotation. Ce pignon 39 engrène avec un pignon 15 qui peut coulisser sur un arbre 16 tout en lui étant lié en rotation. Cet arbre 16, longitudinal par rapport à la tige de guidage 13, sert à actionner en rotation d'outil ou poignet 2 monté l'extrémité du bras 1. La rotation de l'arbre 38 se transmet à l'arbre 16.

Deux soufflets 71 et 72 assurent respectivement, sur le bras 3, l'étanchéité entre la platine 5 et le support 4 et l'étanchéité entre le support 4 et la plaque 32. Deux autres soufflets 73 et 74 assurent respectivement, sur le bras 1, l'étanchéité entre la plaque 11 et le support 4 et l'étanchéité entre le support 4 et la plaque 12.

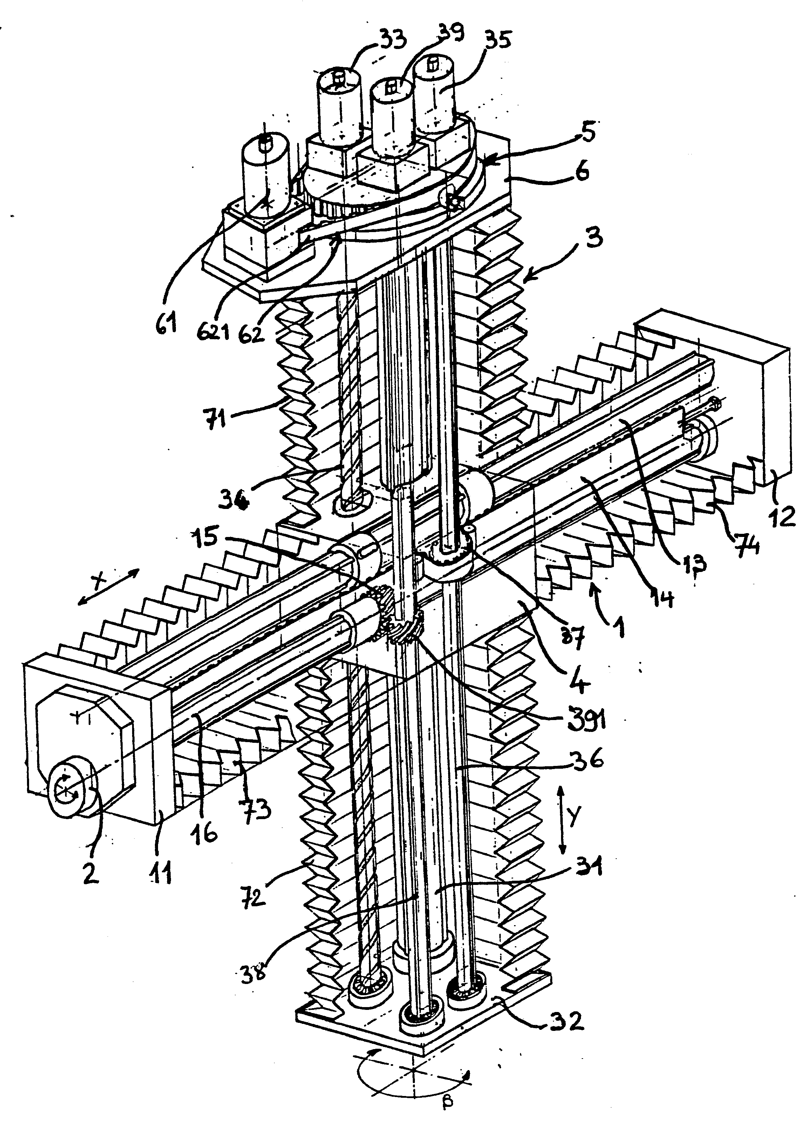

Dans le mode de réalisation de la figure 1, la platine de support peut être montée fixe. Dans le cas où le robot travaille dans une enceinte, la motorisation peut être située en dehors de l'enceinte.

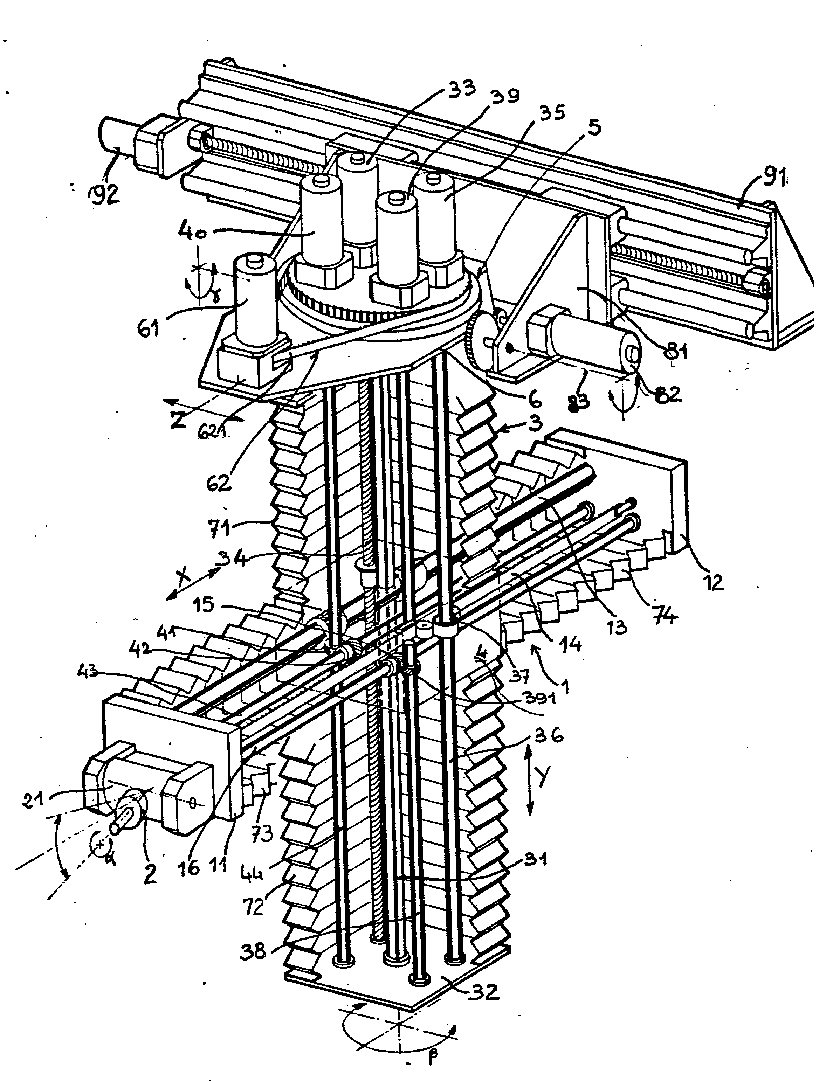

Dans le mode de réalisation de la figure 2, la platine de support 6 est portée par un coulisseau 81 qui est animé d'un mouvement de translation rectiligne selon un axe Z orthogonal aux axes X et Y.

A cet effet, le coulisseau 81 est guidé en translation selon l'axe Z sur une glissière 91 et il est entraîné en translation par un mécanisme à moteur 92.

La platine de support 6 est montée articulée, autour d'un axe 83 parallèle à l'axe Z, sur le coulisseau 81. La rotation de l'ensemble des bras par rapport à l'axe 83 est assurée par un moteur de pivotement 82 porté par le coulisseau 81 et par un mécanisme de transmission intermédiaire.

La platine du support porte un moteur 40 de commande du poignet 2. Ce moteur entraîne en rotation un arbre 44 sur lequel coulisse un pignon 41 lié en translation au support de liaison 4 et engrenant avec un pignon 42 entraînant en rotation un arbre de commande 43 parallèle au bras 1 et servant à commander le poignet 2.

Ce poignet est articulé autour d'un axe 21 perpendiculaire à l'axe X.

Comme dans le mode de réalisation de la figure 1, la motorisation peut être située à l'extérieur de l'enceinte.

Il est bien entendu que l'on peut prévoir, sans sortir du cadre de l'invention, des variantes et des perfectionnements de détail et de même envisager l'emploi de moyens équivalents.

## Revendications

1. Robot multiaxes comportant un premier bras (1) mobile animé d'un mouvement de translation sur un support (4) animé d'un mouvement de translation sur un second bras (3) orthogonal au premier caractérisé par le fait que le bras (3) présente une platine (5) sur laquelle est monté un moteur (33) actionnant par l'intermédiaire d'un mécanisme de transformation de mouvement (32) le support (4) et un moteur (35) actionnant un arbre longitudinal (36) accouplé par l'intermédiaire d'un mécanisme de transformation de mouvement (37-14) au premier bras (1) de manière à déplacer celui-ci en translation.

2. Robot selon la revendication 1 caractérisé par le fait que la platine (5) du bras (3) est montée rotative sur une platine fixe (6), un mécanisme d'entraînement (61, 62) assurant la rotation de cette platine (5).

3. Robot selon l'une quelconque des revendications précédentes, caractérisé par le fait qu'il comporte un système vis-écrou de translation du support (4), ce système comportant une vis (32) entraînée en rotation par un moteur (33) et une vis immobilisée en translation dans le support (4).

4. Robot selon l'une quelconque des revendications précédentes, caractérisé par le fait que le premier bras (1) comprend une tige prismatique guidée en translation dans le support mobile (4) et que l'entraînement dudit premier bras est assuré par le moteur de translation (35) du premier bras par l'intermédiaire d'un arbre d'entraînement (36), actionnant un pignon (37) engrenant avec une crémaillère (14) liée audit premier bras.

5. Robot selon l'une quelconque des revendications précédentes, caractérisé par le fait que la platine rotative (5) porte un moteur (39) d'actionnement d'un outil monté à l'extrémité du bras mobile.

6. Robot selon l'une quelconque des revendications précédentes, caractérisé par le fait qu'il comporte des moyens pour déplacer en translation la platine (6) portant les bras (1, 3) du robot.

7. Robot selon l'une quelconque des revendications précédentes, caractérisé par le fait qu'il comporte des moyens pour faire pivoter la platine (6) portant les bras (1, 3) du robot.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0241820 (BATTENFELD MASCHINENFABRIKEN GMBH) <br> * page 5, lignes 15 - 22 * <br> * page 6, lignes 1 - 24 * | 1, 3, 4, 6 | B25J9/04 <br> B25J9/02 |
| Y | | 2, 5, 7 | |
| Y | EP-A-0122146 (WESTINGHOUSE ELECTRIC CORPORATION) <br> * page 11, ligne 34 - page 12, ligne 6 * <br> --- | 2 | |
| A | EP-A-0048904 (FUJITSU FANUC LTD.) <br> * page 3, ligne 12 - page 4, ligne 9; revendication 1 * <br> --- | 1-3, 5 | |
| Y | FR-A-2606313 (GM THIERION_SA) <br> * revendication 1 * <br> --- | 5 | |
| Y | FR-A-2612826 (HOUILLER) <br> * page 5, ligne 16 - page 6, ligne 8 * <br> --- | 7 | |
| A | US-E-0032414 (HUTCHINS) <br> ----- | | |

**DOMAINES TECHNIQUES RECHERCHES (Int. Cl.5)**

B25J

Le présent rapport a été établi pour toutes les revendications

| Lieu de la recherche | Date d'achèvement de la recherche | Examinateur |
|---|---|---|
| LA HAYE | 20 FEVRIER 1990 | LAMMINEUR P.C.G. |